# EUROPÄISCHE PATENTSCHRIFT

(11) **EP 3 381 110 B1**
(45) Veröffentlichungstag und Bekanntmachung des Hinweises auf die Patenterteilung: **29.03.2023**
(21) Anmeldenummer: 16700906.7
(22) Anmeldetag: 19.01.2016
(51) Int. Cl.: H02M 1/084, H02M 7/483

(54) **MODULARER MULTILEVELUMRICHTER**
MODULAR MULTILEVEL CONVERTER
ONDULEUR MULTINIVEAUX MODULAIRE

(43) Veröffentlichungstag der Anmeldung: 03.10.2018
(73) Patentinhaber: Siemens Energy Global GmbH & Co. KG, 81739 München (DE)
(72) Erfinder: GOBLIRSCH, Wolfgang, 90587 Tuchenbach (DE); LANG, Jörg, 95346 Stadtsteinach (DE); SCHULZE, Marco, 90427 Nürnberg (DE); WIENERS-REHRMANN, Tobias, 37688 Beverungen (DE)
(86) Internationale Anmeldenummer: PCT/EP2016/050957
(87) Internationale Veröffentlichungsnummer: WO 2017/125133

(56) Entgegenhaltungen:
- EP-A1- 2 854 282
- EP-A1- 2 905 889
- WO-A1-2013/178249
- DE-A1-102005 041 087
- US-A1- 2010 328 883
- US-A1- 2014 210 431

## Beschreibung

Die Erfindung betrifft einen modularen Multilevelumrichter mit einer Vielzahl von Submodulen, welche jeweils mindestens zwei elektronische Schaltelemente und einen elektrischen Energiespeicher aufweisen.

Umrichter sind leistungselektronische Schaltungen zum Umwandeln von elektrischer Energie. Mit Umrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannung umgewandelt werden. Umrichter können eine Vielzahl von gleichartigen Modulen (sogenannte Submodule) aufweisen, welche elektrisch in Reihe geschaltet sind. Diese Submodule weisen jeweils mindestens zwei elektronische Schaltelemente und einen elektrischen Energiespeicher auf. Solche Umrichter werden als modulare Multilevelumrichter bezeichnet. Durch die elektrische Reihenschaltung der Submodule lassen sich hohe Ausgangsspannungen erreichen. Die Umrichter sind einfach an unterschiedliche Spannungen anpassbar (skalierbar) und eine gewünschte Ausgangsspannung kann relativ genau erzeugt werden. Modulare Multilevelumrichter werden oftmals im Hochspannungsbereich eingesetzt, beispielsweise als Umrichter bei Hochspannungs-Gleichstrom-Übertragungsanlagen oder als Blindleistungskompensatoren bei flexiblen Drehstromübertragungssystemen.

Aus der europäischen Patentanmeldung EP 2 905 889 A1 ist ein modularer Multilevelumrichter bekannt, bei dem zwischen einer zentralen Steuerung und den einzelnen Modulsteuerungen zwischengeschaltete Steuergeräte angeordnet sind. Die zwischengeschalteten Steuergeräte führen eine Signalverarbeitung durch.

Die internationale Patentanmeldung WO 2013/178249 A1 offenbart einen modularer Multilevelumrichter, bei dem die Steuereinrichtung über einen passiven Kommunikationsknoten mit mehreren Umrichterzellen verbunden ist.

Die Offenlegungsschrift DE 10 2005 041 087 A1 offenbart Module eines modularer Multilevelumrichters, die jeweils eine Elektronikbaugruppe aufweisen. Die Elektronikbaugruppe empfängt oder sendet Signale, die mittels Lichtwellenleitern übertragen werden.

Aus der Schrift US 2010/328883 A1 ist ein modularer Multilevelumrichter bekannt, der in jedem Submodul eine Gleichrichterschaltung, einen Spannungszwischenkreis-Kondensator und eine Wechselrichterschaltung enthält. Eine Steuereinrichtung des Umrichters ist mittels einer elektrischen Kommunikationsverbindung mit einem Glasfaser-Interface verbunden.

Die europäische Patentanmeldung EP 2 854 282 A1 offenbart einen modularen Multilevelumrichter mit einer Vielzahl von Submodulen. Eine Steuereinrichtung ist über Lichtwellenleiter und einen optischen Splitter mit den Submodulen verbunden. Dabei können die Submodule anhand der Laufzeit der Signale durch die Lichtwellenleiter identifiziert werden.

Aus der Patentanmeldung US 2014/210431 A1 ist bekannt, bei modularen Stromversorgungsanlagen Vollbrücken-Inverter oder Halbbrücken-Inverter einzusetzen.

Zur Ansteuerung der in den Submodulen enthaltenen elektronischen Schaltelemente und zur Rückmeldung von Zuständen der Submodule (beispielsweise zur Rückmeldung des Ladezustandes des Energiespeichers des Submoduls) werden Nachrichten zwischen einer zentralen Steuereinrichtung und den Submodulen ausgetauscht. Aus Gründen der einfachen und kostengünstigen Realisierbarkeit ist es wünschenswert, die Steuereinrichtung auf Erdpotenzial anzuordnen, wohingegen die einzelnen Submodule sich auf unterschiedlichen Spannungspotenzialen (unter anderem auch auf Hochspannungspotenzial) befinden können. Daher erfolgt die Nachrichtenübertragung zu den Submodulen mittels Lichtwellenleiter.

Dabei ist es denkbar, von der zentralen Steuereinrichtung einen Lichtwellenleiter zu jedem Submodul zu verlegen (um Nachrichten von der Steuereinrichtung zu dem Submodul zu übertragen) und einen weiteren Lichtwellenleiter von dem Submodul zu der Steuereinrichtung zu verlegen (um Nachrichten von dem Submodul zu der Steuereinrichtung zu übertragen). Bei dieser Lösung würden also je Submodul zwei Lichtwellenleiter benötigt werden, welche sich von dem Submodul zu der Steuereinrichtung erstrecken. Da sich die Steuereinrichtung in einer beträchtlichen Entfernung zu dem jeweiligen Submodul befinden kann (beispielsweise können solche Entfernungen 100 m und mehr betragen), werden erhebliche Längen von Lichtwellenleitern benötigt und es fallen beträchtliche Kosten für diese Lichtwellenleiter sowie für deren Verlegung an.

Der Erfindung liegt die Aufgabe zugrunde, einen Umrichter und ein Verfahren anzugeben, mit denen die Übertragung von Nachrichten zu den Submodulen kostengünstig realisiert werden kann.

Diese Aufgabe wird erfindungsgemäß gelöst durch einen Umrichter und durch ein Verfahren nach den unabhängigen Patentansprüchen. Vorteilhafte Ausführungsformen des Umrichters und des Verfahrens sind in den jeweiligen abhängigen Patentansprüchen angegeben.

Offenbart wird ein modularer Multilevelumrichter mit Submodulen, welche jeweils mindestens zwei elektronische Schaltelemente, einen elektrischen Energiespeicher, zwei galvanische Stromanschlüsse und einen optischen Kommunikationsanschluss aufweisen, und mit einer Steuereinrichtung für die Submodule, wobei die Steuereinrichtung mittels einer ersten optischen Kommunikationsverbindung mit einer elektronischen Schnittstellenschaltung verbunden ist, die Schnittstellenschaltung eine Vielzahl von Submodul-Schnittstellen aufweist, und die Submodul-Schnittstellen jeweils mittels einer optischen Submodul-Kommunikationsverbindung mit einem der Submodule optisch verbunden sind.

Dabei ist besonders vorteilhaft, dass zwischen der Steuereinrichtung und der Schnittstellenschaltung lediglich eine einzige erste optische Kommunikationsverbindung angeordnet zu sein braucht. Diese eine optische Kommunikationsverbindung lässt sich vorteilhafterweise relativ kostengünstig realisieren. Lediglich zwischen der Schnittstellenschaltung und den Submodulen wird jeweils eine (eigene) optische Submodul-Kommunikationsverbindung benötigt, wobei jedem Submodul genau eine optische Submodul-Kommunikationsverbindung zugeordnet ist.

Der Umrichter kann so ausgestaltet sein, dass die optischen Submodul-Kommunikationsverbindungen bidirektionale optische Submodul-Kommunikationsverbindungen sind. Jede bidirektionale Submodul-Kommunikationsverbindung ermöglicht also eine Kommunikation/Nachrichtenübertragung vom Submodul zur Schnittstellenschaltung und von der Schnittstellenschaltung zum Submodul.

Der Umrichter kann so ausgestaltet sein, dass die optischen Submodul-Kommunikationsverbindungen jeweils mindestens einen Lichtwellenleiter aufweisen, der die Schnittstellenschaltung mit einem der Submodule verbindet. Mittels des mindestens einen Lichtwellenleiters lässt sich auf einfache Weise eine elektrische Potenzialtrennung realisieren.

Der Umrichter kann auch so ausgestaltet sein, dass die optischen Submodul-Kommunikationsverbindungen jeweils einen Hin-Lichtwellenleiter zur Nachrichtenübertragung von der Schnittstellenschaltung zu dem jeweiligen Submodul und einen Rück-Lichtwellenleiter zur Nachrichtenübertragung von dem jeweiligen Submodul zu der Schnittstellenschaltung aufweisen. Hierbei dient der Hin-Lichtwellenleiter ausschließlich für die Kommunikation in Richtung des Submoduls und der Rück-Lichtwellenleiter ausschließlich für die Kommunikation in Richtung der Schnittstellenschaltung.

Der Umrichter kann so ausgestaltet sein, dass die optischen Submodul-Kommunikationsverbindungen jeweils einen weiteren Hin-Lichtwellenleiter zur Nachrichtenübertragung von der Schnittstellenschaltung zu dem jeweiligen Submodul und einen weiteren Rück-Lichtwellenleiter zur Nachrichtenübertragung von dem jeweiligen Submodul zu der Schnittstellenschaltung aufweisen, wobei der weitere Hin-Lichtwellenleiter und der weitere Rück-Lichtwellenleiter redundant sind. Der weitere Hin-Lichtwellenleiter und der weitere Rück-Lichtwellenleiter ermöglichen vorteilhafterweise eine Kommunikation mit dem Submodul selbst dann, wenn der Hin-Lichtwellenleiter und/oder der Rück-Lichtwellenleiter ausfallen (beispielsweise weil der Hin-Lichtwellenleiter und/oder der Rück-Lichtwellenleiter beschädigt werden).

Der Umrichter kann so ausgestaltet sein, dass die erste optische Kommunikationsverbindung eine erste bidirektionale optische Kommunikationsverbindung ist. Diese bidirektionale optische Kommunikationsverbindung ermöglicht zwischen der Steuereinrichtung und der Schnittstellenschaltung eine Nachrichtenübertragung in beiden Richtungen.

Der Umrichter kann so ausgestaltet sein, dass die erste optische Kommunikationsverbindung mindestens einen Lichtwellenleiter aufweist, der die Steuereinrichtung mit der Schnittstellenschaltung verbindet. Diese mindestens eine Lichtwellenleiter der ersten optischen Kommunikationsverbindung realisiert vorteilhafterweise eine elektrische Potenzialtrennung zwischen der Steuereinrichtung und der Schnittstellenschaltung.

Der Umrichter kann auch so ausgestaltet sein, dass die erste optische Kommunikationsverbindung einen Hin-Lichtwellenleiter zur Nachrichtenübertragung von der Steuereinrichtung zu der Schnittstellenschaltung und einen Rück-Lichtwellenleiter zur Nachrichtenübertragung von der Schnittstellenschaltung zu der Steuereinrichtung aufweist. Dabei überträgt der Hin-Lichtwellenleiter ausschließlich Nachrichten zur Schnittstellenschaltung und der Rück-Lichtwellenleiter ausschließlich Nachrichten zur Steuereinrichtung.

Der Umrichter kann auch so ausgestaltet sein, dass die erste optische Kommunikationsverbindung einen weiteren Hin-Lichtwellenleiter zur Nachrichtenübertragung von der Steuereinrichtung zu der Schnittstellenschaltung und einen weiteren Rück-Lichtwellenleiter zur Nachrichtenübertragung von der Schnittstellenschaltung zu der Steuereinrichtung aufweist, wobei der weitere Hin-Lichtwellenleiter und der weitere Rück-Lichtwellenleiter redundant sind.

Der redundante weitere Hin-Lichtwellenleiter und der redundante weitere Rück-Lichtwellenleiter ermöglichen vorteilhafterweise eine Nachrichtenübertragung zwischen der Steuereinrichtung und der Schnittstellenschaltung selbst dann, wenn der Hin-Lichtwellenleiter und/oder der Rück-Lichtwellenleiter ausfallen (zum Beispiel weil der Hin-Lichtwellenleiter und/oder der Rück-Lichtwellenleiter beschädigt werden).

Der Umrichter ist so ausgestaltet, dass die Schnittstellenschaltung eine (elektronische) Verteilerschaltung aufweist, welche dazu eingerichtet ist, eine von der Steuereinrichtung stammende Nachricht, die für eines der Submodule bestimmt ist, zu derjenigen Submodul-Schnittstelle zu verteilen (weiterzuleiten), die mit dem einen Submodul verbunden ist. Diese Verteilerschaltung verteilt die von der Steuereinrichtung stammende Nachricht genau zu derjenigen Submodul-Schnittstelle, welche mit dem Submodul verbunden ist, für das die Nachricht bestimmt ist.

Der Umrichter kann auch so ausgestaltet sein, dass die Schnittstellenschaltung eine (elektronische) Sammelschaltung aufweist, welche dazu eingerichtet ist, eine von einem der Submodule stammende Nachricht, die für die Steuereinrichtung bestimmt ist, über die erste optische Kommunikationsverbindung zu der Steuereinrichtung weiterzuleiten. Die Sammelschaltung leitet also die von dem einen Submodul stammende Nachricht zu der Steuereinrichtung weiter.

Der Umrichter ist so ausgestaltet, dass die Schnittstellenschaltung eine (elektronische) Sammelschaltung aufweist, welche dazu eingerichtet ist, von mehreren der Submodule stammende Nachrichten, die jeweils für die Steuereinrichtung bestimmt sind, gesammelt über die erste optische Kommunikationsverbindung zu der Steuereinrichtung weiterzuleiten. Hier leitet die Sammelschaltung mehrere Nachrichten, welche von verschiedenen Submodulen stammen, gesammelt an die Steuereinrichtung weiter.

Der Umrichter kann so ausgestaltet sein, dass die Abstände zwischen der Schnittstellenschaltung und den Submodulen jeweils kleiner sind als der Abstand zwischen der Schnittstellenschaltung und der Steuereinrichtung.

Je größer der Abstand zwischen der Schnittstellenschaltung und der Steuereinrichtung im Verhältnis zum Abstand zwischen der Schnittstellenschaltung und den einzelnen Submodulen ist, desto größer ist die Einsparung an Lichtwellenleiterlängen durch die erste optische Kommunikationsverbindung, über die die Nachrichten gesammelt übertragen werden.

Der Umrichter kann auch so ausgestaltet sein, dass die Lichtwellenleiter der optischen Submodul-Kommunikationsverbindungen jeweils kürzer sind als der mindestens eine Lichtwellenleiter der ersten optischen Kommunikationsverbindung.

Je kürzer die Lichtwellenleiter der optischen Submodul-Kommunikationsverbindungen im Verhältnis zu dem mindestens einen Lichtwellenleiter der ersten optischen Kommunikationsverbindung sind, desto größer ist die Einsparung an Lichtwellenleiterlängen durch die erste optische Kommunikationsverbindung, über die die Nachrichten gesammelt übertragen werden.

Offenbart wird weiterhin ein Verfahren zum Übertragen einer Nachricht zwischen einer Steuereinrichtung und Submodulen eines modularen Multilevelumrichters, wobei die Submodule jeweils mindestens zwei elektronische Schaltelemente, einen elektrischen Energiespeicher, zwei galvanische Stromanschlüsse und einen optischen Kommunikationsanschluss aufweisen, und wobei die Steuereinrichtung mittels einer ersten optischen Kommunikationsverbindung mit einer elektronischen Schnittstellenschaltung verbunden ist, die Schnittstellenschaltung eine Vielzahl von Submodul-Schnittstellen aufweist, und die Submodul-Schnittstellen jeweils mittels einer optischen Submodul-Kommunikationsverbindung mit einem der Submodule optisch verbunden sind, wobei bei dem Verfahren
- eine für eines der Submodule bestimmte Nachricht von der Steuereinrichtung über die erste optische Kommunikationsverbindung zu der elektronischen Schnittstellenschaltung übertragen wird,
- die Nachricht zu derjenigen Submodul-Schnittstelle weitergeleitet wird, die mit dem einen Submodul verbunden ist, und
- daraufhin die Nachricht (über die jeweilige Submodul-Kommunikationsverbindung) zu dem einen Submodul übertragen wird.

Das Verfahren kann so ablaufen, dass
- eine für die Steuereinrichtung bestimmte Nachricht von dem einen Submodul über die mit dem einen Submodul verbundene Submodul-Kommunikationsverbindung zu der Schnittstellenschaltung übertragen wird, und
- daraufhin die für die Steuereinrichtung bestimmte Nachricht über die erste optische Kommunikationsverbindung zu der Steuereinrichtung übertragen wird.

Das Verfahren läuft so ab, dass
- eine für die Steuereinrichtung bestimmte Nachricht von dem einen Submodul über die mit dem einen Submodul verbundene Submodul-Kommunikationsverbindung zu der Schnittstellenschaltung übertragen wird, und
- daraufhin die für die Steuereinrichtung bestimmte Nachricht gemeinsam mit von anderen Submodulen stammenden, für die Steuereinrichtung bestimmten Nachrichten (gesammelt / als Sammelnachricht) über die erste optische Kommunikationsverbindung zu der Steuereinrichtung übertragen wird.

Das Verfahren kann so ablaufen, dass
- die für die Steuereinrichtung bestimmte Nachricht von dem einen Submodul über einen Rück-Lichtwellenleiter der Submodul-Kommunikationsverbindung zu der Schnittstellenschaltung übertragen wird.

Das Verfahren kann auch so ablaufen, dass die für die Steuereinrichtung bestimmte Nachricht von dem einen Submodul über einen Rück-Lichtwellenleiter und über einen weiteren redundanten Rück-Lichtwellenleiter der Submodul-Kommunikationsverbindung zu der Schnittstellenschaltung übertragen wird.

Das Verfahren kann so ablaufen, dass die für die Steuereinrichtung bestimmte Nachricht von der Schnittstellenschaltung über einen Rück-Lichtwellenleiter der ersten optischen Kommunikationsverbindung zu der Steuereinrichtung übertragen wird.

Das Verfahren kann auch so ablaufen, dass die für die Steuereinrichtung bestimmte Nachricht von der Schnittstellenschaltung über einen Rück-Lichtwellenleiter der ersten optischen Kommunikationsverbindung und über einen weiteren redundanten Rück-Lichtwellenleiter der ersten optischen Kommunikationsverbindung zu der Steuereinrichtung übertragen wird.

Die genannten Ausführungsformen des Verfahrens weisen gleichartige Vorteile auf, wie sie oben im Zusammenhang mit dem modularen Multilevelumrichter angegeben sind.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel eines modularen Multilevelumrichters, in
- Figur 2: ein Ausführungsbeispiel eines Submoduls, in
- Figur 3: ein weiteres Ausführungsbeispiel eines Submoduls, in
- Figur 4: ein Ausführungsbeispiel eines Multilevelumrichters mit einer Schnittstellenschaltung, und in
- Figur 5: ein beispielhafter Verfahrensablauf dargestellt.

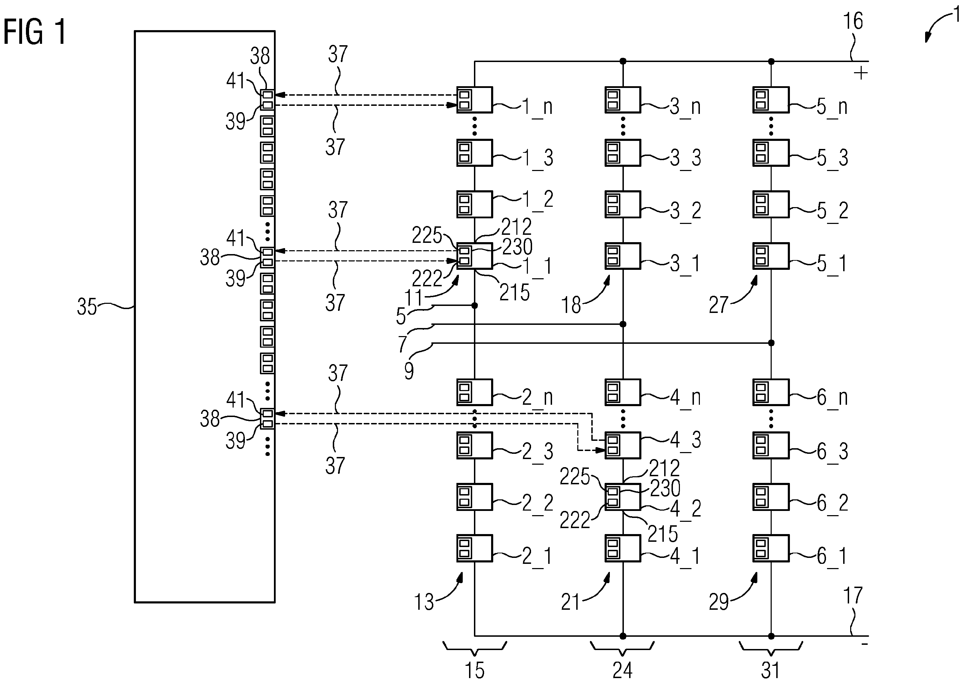

In Figur 1 ist ein Umrichter 1 in Form eines modularen Multilevelumrichters 1 (modular multilevel converter, MMC) dargestellt. Dieser Multilevelumrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Umrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden.

Jeder Phasenmodulzweig weist eine Mehrzahl von Submodulen (1_1, 1_2, 1_3, ... 1_n; 2_1 ... 2_n; usw.) auf, welche (mittels ihrer galvanischen Stromanschlüsse) elektrisch in Reihe geschaltet sind. Im Ausführungsbeispiel der Figur 1 weist jeder Phasenmodulzweig n Submodule auf. Die Anzahl der (mittels ihrer galvanischen Stromanschlüsse) elektrisch in Reihe geschalteten Submodule kann sehr verschieden sein, mindestens sind zwei Submodule in Reihe geschaltet, es können aber auch beispielsweise 50 oder 100 Submodule elektrisch in Reihe geschaltet sein. Im Ausführungsbeispiel ist n = 36: der erste Phasenmodulzweig weist also 36 Submodule 1_1, 1_2, 1_3, ... 1_36 auf.

Im linken Bereich der Figur 1 ist schematisch eine Steuereinrichtung 35 für die Submodule 1_1 bis 6_n dargestellt. Von dieser zentralen Steuereinrichtung 35 werden optische Nachrichten zu den einzelnen Submodulen übertragen. Die Nachrichtenübertragung zwischen der Steuereinrichtung und einem Submodul ist jeweils symbolhaft durch zwei gestrichelte Linien 37 dargestellt; die Richtung der Nachrichtenübertragung ist durch die Pfeilspitze an den gestrichelten Linien 37 symbolisiert. Die Steuereinrichtung 35 weist eine Vielzahl von optischen Kommunikationsanschlüssen 38 auf. Jeder optische Kommunikationsanschluss 38 weist einen optischen Ausgang 39 und einen optischen Eingang 41 auf. Die Steuereinrichtung 35 sendet mittels der optischen Kommunikationsanschlüsse 38 optische Nachrichten an die Submodule ab und empfängt optische Nachrichten von den einzelnen Submodulen. Dabei senden die optischen Ausgänge 39 der Steuereinrichtung 35 die optischen Nachrichten an die Submodule ab und die optischen Eingänge 41 der Steuereinrichtung 35 empfangen die optischen Nachrichten von den Submodulen. Dies ist am Beispiel der Submodule 1_1, 1_n und 4_3 dargestellt; zu den anderen Submodulen werden auf die gleiche Art und Weise optische Nachrichten gesendet bzw. von diesen Submodulen Nachrichten empfangen. Nach der Darstellung der Figur 1 werden also pro Submodul zwei Lichtwellenleiter benötigt, die sich jeweils zwischen dem Submodul und der Steuereinrichtung erstrecken. Dies ist die eingangs beschriebene teure Lösung mit großen benötigten Lichtwellenleiterlängen. Im Unterschied dazu wird im Folgenden eine andere Lösung beschrieben, bei der kleinere Lichtwellenleiterlängen ausreichend sind.

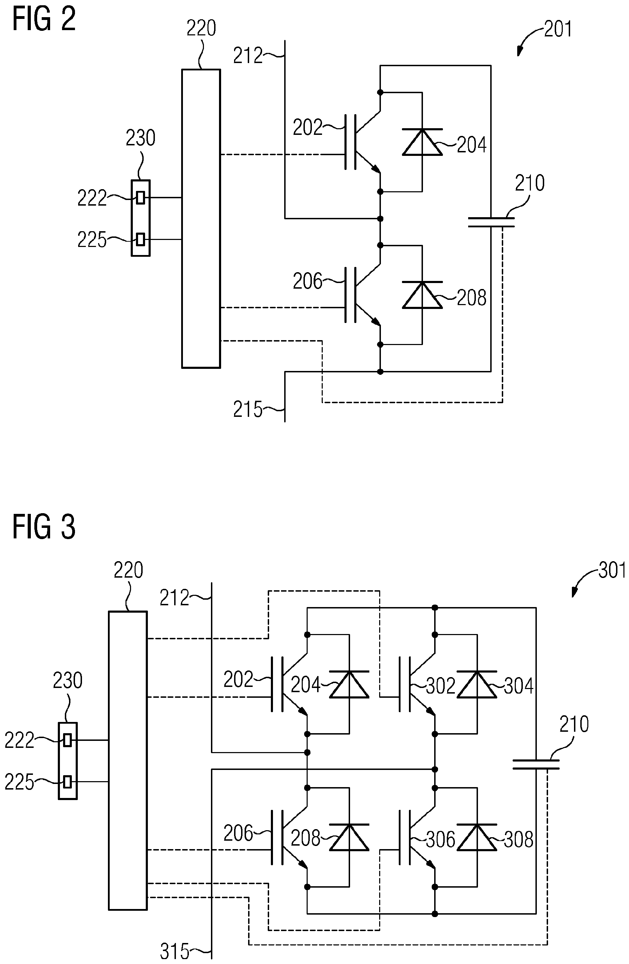

In Figur 2 ist der prinzipielle Aufbau eines Submoduls 201 dargestellt. Dabei kann es sich beispielsweise um das Submodul 1_1 des ersten Phasenmodulzweigs 11 (oder auch um eines der anderen in Figur 1 dargestellten Submodule) handeln. Das Submodul ist als ein Halbbrückenmodul 201 ausgestaltet. Das Submodul 201 weist ein erstes abschaltbares Halbleiterventil 202 mit einer ersten antiparallel geschalteten Diode 204 auf. Weiterhin weist das Submodul 201 ein zweites abschaltbares Halbleiterventil 206 mit einer zweiten antiparallel geschalteten Diode 208 sowie einen elektrischen Energiespeicher 210 in Form eines Kondensators 210 auf. Das erste abschaltbare Halbleiterventil 202 ist ein erstes elektronisches Schaltelement 202; das zweite abschaltbare Halbleiterventil 206 ist ein zweites elektronisches Schaltelement 206. Das erste abschaltbare Halbleiterventil 202 und das zweite abschaltbare Halbleiterventil 206 sind jeweils als ein IGBT (insulated-gate bipolar transistor) ausgestaltet. Das erste abschaltbare Halbleiterventil 202 ist elektrisch in Reihe geschaltet mit dem zweiten abschaltbaren Halbleiterventil 206. Am Verbindungspunkt zwischen den beiden Halbleiterventilen 202, 206 ist ein erster galvanischer Submodulanschluss 212 angeordnet. An dem Anschluss des zweiten Halbleiterventils 206, welcher dem Verbindungspunkt gegenüberliegt, ist ein zweiter galvanischer Submodulanschluss 215 angeordnet. Der zweite Submodulanschluss 215 ist weiterhin mit einem ersten Anschluss des Energiespeichers 210 verbunden; ein zweiter Anschluss des Energiespeichers 210 ist elektrisch verbunden mit dem Anschluss des ersten Halbleiterventils 202, der dem Verbindungspunkt gegenüberliegt.

Der Energiespeicher 210 ist also elektrisch parallel geschaltet zu der Reihenschaltung aus dem ersten Halbleiterventil 202 und dem zweiten Halbleiterventil 206. Durch entsprechende Ansteuerung des ersten Halbleiterventils 202 und des zweiten Halbleiterventils 206 durch eine submodulinterne elektronische Ansteuerschaltung 220 kann erreicht werden, dass zwischen dem ersten galvanischen Submodulanschluss 212 und dem zweiten galvanischen Submodulanschluss 215 entweder die Spannung des Energiespeichers 210 ausgegeben wird oder keine Spannung ausgegeben wird (d.h. eine Nullspannung ausgegeben wird). Durch Zusammenwirken der Submodule der einzelnen Phasenmodulzweige kann so die jeweils gewünschte Ausgangsspannung des Umrichters erzeugt werden.

Zur submodulexternen Kommunikation weist das Submodul 201 einen optischen Kommunikationseingang 222 und einen optischen Kommunikationsausgang 225 auf. Der optische Kommunikationseingang 222 und der optische Kommunikationsausgang 225 sind elektrisch mit der Ansteuerschaltung 220 verbunden. Der optische Kommunikationseingang 222 und der optische Kommunikationsausgang 225 sind Teile eines optischen Kommunikationsanschlusses 230. Der optische Kommunikationsanschluss 230 weist also den optischen Kommunikationseingang 222 und den optischen Kommunikationsausgang 225 auf. An den optischen Kommunikationsanschlusses 230 (genauer gesagt an den optischen Kommunikationseingang 222 und den optischen Kommunikationsausgang 225) werden zur submodulexternen Kommunikation Lichtwellenleiter angeschlossen. Weiterhin kann die Ansteuerschaltung 220 auch Zustände des Submoduls erfassen und an die zentrale Steuereinrichtung 35 melden. In Figur 2 ist beispielhaft mittels einer gestrichelten Linie angedeutet, dass die Ansteuerschaltung 220 den Ladezustand des Energiespeichers 210 erfasst und an die zentrale Steuereinrichtung 35 melden kann.

Der optische Kommunikationsanschluss 230 des Submoduls 201 leitet die an ihm eintreffenden optischen Nachrichten zu der Ansteuerschaltung 220 weiter; die Ansteuerschaltung 220 gibt (veränderte oder unveränderte optische Nachrichten an dem optischen Kommunikationsausgang 225 des Submoduls aus.

In Figur 3 ist ein weiteres Ausführungsbeispiel eines Submoduls 301 dargestellt. Bei diesem Submodul 301 kann es sich beispielsweise um das Submodul 1_n (oder auch um eines der anderen in Figur 1 dargestellten Submodule) handeln. Neben dem bereits aus Figur 2 bekannten ersten Halbleiterventil 202, zweiten Halbleiterventil 206, erster Diode 204, zweiter Diode 208, Energiespeicher 210, Ansteuerschaltung 220 und Kommunikationsanschluss 230 weist das in Figur 3 dargestellte Submodul 301 ein drittes abschaltbares Halbleiterventil 302 mit einer antiparallel geschalteten dritten Diode 304 sowie ein viertes abschaltbares Halbleiterventil 306 mit einer vierten antiparallel geschalteten Diode 308 auf. Das dritte abschaltbare Halbleiterventil 302 ist ein drittes elektronisches Schaltelement 302; das vierte abschaltbare Halbleiterventil 306 ist ein viertes elektronisches Schaltelement 306. Das dritte abschaltbare Halbleiterventil 302 und das vierte abschaltbare Halbleiterventil 306 sind jeweils als ein IGBT ausgestaltet. Im Unterschied zur Schaltung der Figur 2 ist der zweite galvanische Submodulanschluss 315 nicht mit dem zweiten Halbleiterventil 206 elektrisch verbunden, sondern mit einem Mittelpunkt einer elektrischen Reihenschaltung aus dem dritten Halbleiterventil 302 und dem vierten Halbleiterventil 306.

Das Submodul 301 der Figur 3 ist ein sogenanntes Vollbrückenmodul 301. Dieses Vollbrückenmodul 301 zeichnet sich dadurch aus, dass bei entsprechender Ansteuerung der vier Halbleiterventile zwischen dem ersten galvanischen Submodulanschluss 212 und dem zweiten galvanischen Submodulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 301 die Polarität der Ausgangsspannung umgekehrt werden. Der Umrichter 1 kann entweder nur Halbbrückenmodule 201, oder auch Halbbrückenmodule 201 und Vollbrückenmodule 301 aufweisen.

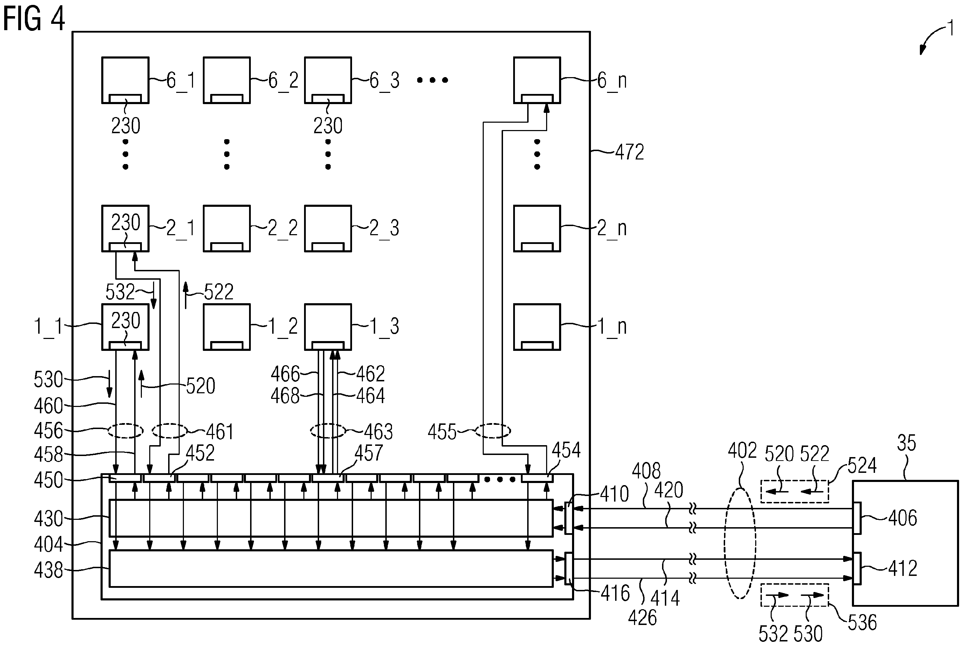

Die Darstellungen der Figuren 2 und 3 zeigen jeweils ein Submodul mit dem ersten galvanischen Submodulanschluss 212 und dem zweiten galvanischen Submodulanschluss 215 bzw. 315. Über den ersten galvanischen Submodulanschluss 212 und den zweiten galvanischen Submodulanschluss 215, 315 fließen große elektrische Ströme des Umrichters. Zusätzlich weist jedes Submodul die Ansteuerschaltung 220 auf, die insbesondere die Schaltelemente 202, 206, 302 und/oder 306 ansteuert. Diese Ansteuerschaltung 220 kommuniziert über den optischen Kommunikationsanschluss 230 (insbesondere über den optischen Kommunikationseingang 222 und den optischen Kommunikationsausgang 225) mittels Lichtwellenleitern potentialgetrennt mit submodulexternen Einheiten (hier: mit einer submodulexternen Schnittstellenschaltung 404, vgl. Figur 4). Die Verschaltung/Verbindung des optischen Kommunikationsanschlusses 230 der einzelnen Submodule mittels Lichtwellenleitern wird im Folgenden beschrieben.

In Figur 4 sind von dem aus Figur 1 bekannten Multilevelumrichter 1 lediglich die zentrale Steuereinrichtung 35 sowie einige beispielhafte Submodule dargestellt. Alle weiteren Submodule des Multilevelumrichters 1 sind gleichartig wie diese beispielhaft dargestellten Submodule angeordnet. Im Unterschied zur Darstellung der Figur 1 sind in Figur 4 die leistungsführenden galvanischen Anschlüsse 212, 215 der Submodule nicht dargestellt; es ist in Figur 4 lediglich der optische Kommunikationsanschluss 230 der einzelnen Submodule (welcher den optischen Kommunikationseingang 222 und den optischen Kommunikationsausgang 225 der Submodule aufweist) dargestellt.

Die Steuereinrichtung 35 ist über eine erste optische Kommunikationsverbindung 402 mit einer elektronischen Schnittstellenschaltung 404 optisch verbunden. Dabei ist ein optischer Kommunikationsausgang 406 der Steuereinrichtung 35 über einen Hin-Lichtwellenleiter 408 mit einem optischen Kommunikationseingang 410 der Schnittstellenschaltung 404 optisch verbunden. Weiterhin ist ein optischer Kommunikationseingang 412 der Steuereinrichtung 35 über einen Rück-Lichtwellenleiter 414 mit einem optischen Kommunikationsausgang 416 der Schnittstellenschaltung 404 optisch verbunden. Der optische Kommunikationsausgang 406 der Steuereinrichtung 35 und der optische Kommunikationsausgang 416 der Schnittstellenschaltung 404 weisen jeweils einen optischen Ausgang und einen weiteren (redundanten) optischen Ausgang auf; der optische Kommunikationseingang 412 der Steuereinrichtung 35 und der optische Kommunikationseingang 410 der Schnittstellenschaltung 404 weisen jeweils einen optischen Eingang und einen weiteren (redundanten) optischen Eingang auf.

Zusätzlich ist der optische Kommunikationsausgang 406 der Steuereinrichtung 35 mittels eines weiteren Hin-Lichtwellenleiters 420 mit dem optischen Kommunikationseingang 410 der Schnittstellenschaltung 404 optisch verbunden. Zusätzlich ist ebenfalls der optische Kommunikationseingang 412 der Steuereinrichtung 35 mittels eines weiteren Rück-Lichtwellenleiters 426 mit dem optischen Kommunikationsausgang 416 der Schnittstellenschaltung 404 optisch verbunden. Der weitere Hin-Lichtwellenleiter 420 und der weitere Rück-Lichtwellenleiter 426 sind redundante Lichtwellenleiter, d.h. diese Lichtwellenleiter dienen der Verbesserung der Verfügbarkeit des Umrichters, können jedoch in anderen Ausführungsbeispielen auch weggelassen werden.

Der optische Kommunikationseingang 410 der Schnittstellenschaltung 404 ist schaltungsintern elektrisch mit einer Verteilerschaltung 430 verbunden. Die Verteilerschaltung 430 ist elektrisch mit einer Vielzahl von Submodul-Schnittstellen 450, 452, 454, 457 usw. elektrisch verbunden. Der optische Kommunikationsausgang 416 der Schnittstellenschaltung 404 ist schaltungsintern elektrisch mit einer Sammelschaltung 438 verbunden. Die Sammelschaltung 438 ist elektrisch mit der Vielzahl von Submodul-Schnittstellen 450, 452, 454, 457 usw. elektrisch verbunden.

Die erste Submodul-Schnittstelle 450 ist mittels einer ersten optischen Submodul-Kommunikationsverbindung 456 mit dem Submodul 1_1 optisch verbunden. Dabei weist die erste Submodul-Kommunikationsverbindung 456 einen Hin-Lichtwellenleiter 458 und einen Rück-Lichtwellenleiter 460 auf. Der Hin-Lichtwellenleiter 458 überträgt Nachrichten von der Schnittstellenschaltung 404 zu dem Submodul 1_1; der Rück-Lichtwellenleiter 460 überträgt Antwortnachrichten von dem Submodul 1_1 zu der Schnittstellenschaltung 404. Die anderen Submodule sind gleichartig mit der Schnittstellenschaltung 404 mittels jeweils eines Hin-Lichtwellenleiters und eines Rück-Lichtwellenleiters optisch verbunden. Dazu weist die Schnittstellenschaltung 404 beispielsweise eine zweite Submodul-Schnittstelle 452 (zum Anschluss des Submoduls 2_1 mittels einer zweiten optischen Submodul-Kommunikationsverbindung 461) und eine m-te Submodul-Schnittstelle 454 (zum Anschluss des Submoduls 6_n mittels einer m-ten optischen Submodul-Kommunikationsverbindung 455) auf (m ist dabei die Anzahl der Submodule, die über optische Submodul-Kommunikationsverbindungen an die Schnittstellenschaltung 404 angeschlossen sind).

Im Zusammenhang mit Submodul 1_3 ist eine optionale Variante der Verbindung zwischen einem Submodul und der Schnittstellenschaltung 404 dargestellt: eine optische Submodul-Kommunikationsverbindung 463 (welche das Submodul 1_3 optisch mit der Schnittstellenschaltung 404 verbindet) weist einen Hin-Lichtwellenleiter 462, einen weiteren Hin-Lichtwellenleiter 464, einen Rück-Lichtwellenleiter 466 und einen weiteren Rück-Lichtwellenleiter 468 auf. Der weitere Hin-Lichtwellenleiter 464 und der weitere Rück-Lichtwellenleiter 468 sind optional, d.h. sie können in anderen Ausführungsbeispielen auch weggelassen werden. Falls der Hin-Lichtwellenleiter 462 beschädigt werden sollte, werden Nachrichten von der Schnittstellenschaltung 404 zu dem Submodul 1_3 über den weiteren redundanten Hin-Lichtwellenleiter 464 übertragen. Falls der Rück-Lichtwellenleiter 466 beschädigt werden sollte, werden Nachrichten von dem Submodul 1_3 zu der Schnittstellenschaltung 404 über den weiteren redundanten Rück-Lichtwellenleiter 468 übertragen. Dadurch wird die Betriebssicherheit des Umrichters deutlich erhöht. Eine, mehrere oder alle optische Submodul-Kommunikationsverbindungen des Umrichters 1 können wie die optische Submodul-Kommunikationsverbindung 463 (redundant) ausgestaltet sein.

Die elektronische Verteilerschaltung 430 verteilt Nachrichten (welche von der Steuereinrichtung 35 stammen und an jeweils ein Submodul gerichtet sind) zu derjenigen Submodul-Schnittstelle, die mit dem jeweiligen Submodul über die jeweilige optische Submodul-Kommunikationsverbindung optisch verbunden ist. Die elektronische Sammelschaltung 438 leitet eine Nachricht (die von einem der Submodule stammt und für die Steuereinrichtung 35 bestimmt ist) über die erste optische Kommunikationsverbindung 402 zu der Steuereinrichtung 35 weiter. Dabei kann die Sammelschaltung 438 mehrere Nachrichten (welche von verschiedenen Submodulen stammen und welche jeweils für die Steuereinrichtung 35 bestimmt sind) gesammelt (als eine Sammelnachricht) über die erste optische Kommunikationsverbindung 402 zu der Steuereinrichtung 35 weiterleiten.

Im Ausführungsbeispiel der Figur 4 sind die Abstände zwischen der Schnittstellenschaltung 404 und den Submodulen jeweils kleiner als der Abstand zwischen der Schnittstellenschaltung 404 und der Steuereinrichtung 35. Ebenso sind die Lichtwellenleiter der optischen Submodul-Kommunikationsverbindungen 455, 456, 461, 463 usw. jeweils kürzer als die Lichtwellenleiter der ersten optischen Kommunikationsverbindung 402. Dies zeigt sich beim Aufbau des Multilevelumrichters daran, dass die Steuereinrichtung 35 räumlich weit entfernt von der Schnittstellenschaltung 404 und den Submodulen angeordnet ist (dieser Abstand kann bis zu 100m und mehr betragen).

Im Ausführungsbeispiel der Figur 4 befinden sich die Schnittstellenschaltung 404 und die Submodule in einem Umrichtergebäude 472. In diesem Umrichtergebäude 472 sind die einzelnen Submodule in einem oder mehreren sogenannten Umrichtertürmen (Konvertertürmen) angeordnet. Diese Umrichtertürme weisen jeweils mehrere Etagen auf: beispielsweise befindet sich das Submodul 1_n in der ersten Etage des Umrichterturms, das Submodul 2_n in der zweiten Etage des Umrichterturms und das Submodul 6_n in der sechsten Etage. Die einzelnen Submodule und die Schnittstellenschaltung 404 befinden sich also relativ nah beieinander in dem Umrichtergebäude 472, wohingegen sich die Steuereinrichtung 35 in einem eigenen (in der Figur 4 nicht dargestellten) Gebäude befindet, welches sich in beträchtlichem Abstand von dem Umrichtergebäude 472 befindet.

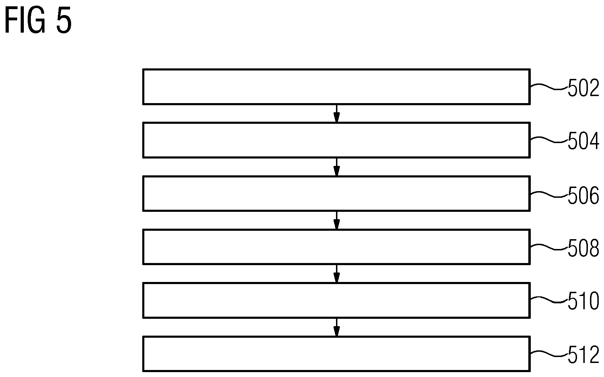

In Figur 5 ist ein beispielhafter Verfahrensablauf dargestellt, der bei dem Multilevelumrichter 1 stattfindet.

Verfahrensschritt 502:
Die Steuereinrichtung 35 sendet eine erste Nachricht 520 und eine zweite Nachricht 522 über die erste optische Kommunikationsverbindung 402 (genauer gesagt, über den Hin-Lichtwellenleiter 408 und parallel dazu über den redundanten weiteren Hin-Lichtwellenleiter 420) zu der Schnittstellenschaltung 404. Dabei ist die erste Nachricht 520 an das Submodul 1_1 gerichtet und die zweite Nachricht 522 ist an das Submodul 2_1 gerichtet. Die erste Nachricht 520 und die zweite Nachricht 522 werden in Form einer ersten Sammelnachricht 524 (gesammelt) von der Steuereinrichtung 35 zu der Schnittstellenschaltung 404 übertragen. Daraufhin gelangt die erste Sammelnachricht 524 zu der Verteilerschaltung 430. (In einem anderen Ausführungsbeispiel kann die erste Sammelnachricht 524 weitere Nachrichten enthalten. Insbesondere kann die erste Sammelnachricht 524 m Nachrichten enthalten, die jeweils an eines der m Submodule gerichtet sind, die mit der Schnittstellenschaltung 404 verbunden sind.)

Verfahrensschritt 504:
Die Verteilerschaltung 430 verteilt die beiden Nachrichten auf die einzelnen Submodul-Schnittstellen: die erste Nachricht 520 wird von der Verteilerschaltung 430 zu der ersten Submodul-Schnittstelle 450 geleitet, die zweite Nachricht 522 wird von der Verteilerschaltung 430 zu der zweiten Submodul-Schnittstelle 452 geleitet. Die Verteilung geschieht im Ausführungsbeispiel anhand der Reihenfolge der Nachrichten 520, 522 in der Sammelnachricht (Die Nachrichten sind seriell in der ersten Sammelnachricht 524 angeordnet): die erste in der ersten Sammelnachricht 524 angeordnete Nachricht (das ist hier die erste Nachricht 520) wird zu der ersten Submodul-Schnittstelle 450 geleitet; die zweite in der ersten Sammelnachricht 524 angeordnete Nachricht (das ist hier die zweite Nachricht 522) wird zu der zweiten Submodulschnittstelle 452 geleitet usw. Wenn in der ersten Sammelnachricht 524 Plätze frei sind, wird zu der entsprechenden Submodul-Schnittstelle keine Nachricht geleitet.

Verfahrensschritt 506:
Von der ersten Submodul-Schnittstelle 450 gelangt die erste Nachricht 520 über den Hin-Lichtwellenleiter 458 der Submodul-Kommunikationsverbindung 456 zu dem ersten Submodul 1_1. Im Ausführungsbeispiel ist in der ersten Nachricht die Anweisung an das Submodul 1_1 enthalten, das erste elektronische Schaltelement 202 zu schließen und das zweite elektronische Schaltelement 206 zu öffnen. Das Submodul 1_1 führt diese Anweisung aus: es schließt also das erste elektronische Schaltelement 202 und öffnet das zweite elektronische Schaltelement 206. Daraufhin sendet das Submodul 1_1 eine erste Antwortnachricht 530 über den Rück-Lichtwellenleiter 460 der Submodul-Kommunikationsverbindung 456 zu der ersten Submodul-Schnittstelle 450 zurück. Diese erste Antwortnachricht 530 wird dann zu der Sammelschaltung 438 übertragen.

Verfahrensschritt 508:
Die zweite Nachricht 522 wird von der Verteilerschaltung 430 über die zweite Submodul-Schnittstelle 452 und die zweite optische Submodul-Kommunikationsverbindung 461 zu dem Submodul 2_1 übertragen. Die zweite Nachricht enthält eine Anweisung an das Submodul 2_1. Das Submodul 2_1 führt diese Anweisung aus und sendet eine zweite Antwortnachricht 532 ab, welche an die Steuereinrichtung 35 gerichtet ist. Die zweite Antwortnachricht 532 gelangt über die zweite optische Submodul-Kommunikationsverbindung 461 und die zweite Submodul-Schnittstelle 452 zu der Sammelschaltung 438.

Verfahrensschritt 510:
Die Sammelschaltung 438 erzeugt eine zweite Sammelnachricht 536, welche die erste Antwortnachricht 530 und die zweite Antwortnachricht 532 enthält. Die Antwortnachrichten sind seriell in der zweiten Sammelnachricht 536 angeordnet: die erste Antwortnachricht 530 steht an erster Stelle in der zweiten Sammelnachricht 536; die zweite Antwortnachricht 532 steht an zweiter Stelle in der zweiten Sammelnachricht 536. Wenn von einem Submodul keine Antwortnachricht vorliegt, dann bleibt die zugeordnete Stelle in der zweiten Sammelnachricht leer oder unverändert. (In einem anderen Ausführungsbeispiel kann die zweite Sammelnachricht 536 weitere Nachrichten enthalten. Insbesondere kann die zweite Sammelnachricht 536 m Nachrichten enthalten, die jeweils von einem der m Submodule stammen, die mit der Schnittstellenschaltung 404 verbunden sind.)

Verfahrensschritt 512:
Daraufhin sendet die Sammelschaltung 438 die zweite Sammelnachricht 536 über die erste optische Kommunikationsverbindung 402 (genauer gesagt, über den Rück-Lichtwellenleiter 414 und parallel dazu über den weiteren redundanten Rück-Lichtwellenleiter 426) zu der Steuereinrichtung 35. Die Steuereinrichtung 35 empfängt die zweite Sammelnachricht 536 und extrahiert aus dieser die erste Antwortnachricht 530 und die zweite Antwortnachricht 532. Dadurch ist die Steuereinrichtung 35 darüber informiert, dass das Submodul 1_1 die erste Nachricht 520 empfangen und die in der ersten Nachricht 520 enthaltene Anweisung ausgeführt hat. Ebenso ist Steuereinrichtung 35 darüber informiert, dass das Submodul 2_1 die zweite Nachricht 522 empfangen und die in der zweiten Nachricht 522 enthaltene Anweisung ausgeführt hat.

Wenn eine Submodul-Kommunikationsverbindung neben dem Hin-Lichtwellenleiter und dem Rück-Lichtwellenleiter auch noch einen weiteren Hin-Lichtwellenleiter sowie einen weiteren Rück-Lichtwellenleiter aufweist (wie das bei der Submodul-Kommunikationsverbindung 463 der Fall ist), dann wird die an das entsprechende Submodul übertragene Nachricht jeweils über den Hin-Lichtwellenleiter und den weiteren Hin-Lichtwellenleiter übertragen; ebenso wird die Antwortnachricht des jeweiligen Submoduls über den Rück-Lichtwellenleiter und den weiteren Rück-Lichtwellenleiter zurück zu der Schnittstellenschaltung übertragen. Durch die redundante Nachrichtenübertragung erhöht sich die Betriebssicherheit des Umrichters beträchtlich.

Die optischen Submodul-Kommunikationsverbindungen 455, 456, 461, 463 usw. sind jeweils bidirektionale optische Submodul-Kommunikationsverbindungen. Ebenso ist die erste optische Kommunikationsverbindung 402 eine bidirektionale erste optische Kommunikationsverbindung 402. Die erste optische Kommunikationsverbindung 402 weist eine größere Bandbreite der Nachrichtenübertragung auf als die einzelnen Submodul-Kommunikationsverbindungen 456, 461, 463 usw., weil über die erste optische Kommunikationsverbindung die Nachrichten für alle an die Schnittstellenschaltung angeschlossenen Submodule übertragen werden müssen. Über die einzelnen Submodul-Kommunikationsverbindungen brauchen jedoch nur die Nachrichten zu dem jeweils angeschlossenen Submodul übertragen zu werden.

Bei einer großen Anzahl von Submodulen kann der Umrichter 1 auch mehrere Schnittstellenschaltungen 404 aufweisen, denen jeweils eine Teilmenge der Submodule des Umrichters zugeordnet ist. Dann sind die zugeordneten Submodule jeweils über Submodul-Kommunikationsverbindungen mit der jeweiligen Schnittstellenschaltung optisch verbunden. So kann beispielsweise in jedem Umrichterturm eine eigene Schnittstellenschaltung 404 angeordnet sein. In diesem Fall können die Schnittstellenschaltungen 404 auch als dezentrale Schnittstellenschaltungen beziehungsweise als dezentrale Kommunikationsschnittstellenschaltungen bezeichnet werden.

Die (relativ kurzen) Lichtwellenleiter der optischen Submodul-Kommunikationsverbindungen können preisgünstige Kunststoff-Lichtwellenleiter sein, wohingegen die vergleichsweise langen Lichtwellenleiter der ersten optischen Kommunikationsverbindung 402 Glas-Lichtwellenleiter sein können.

Wenn die Abstände zwischen der Schnittstellenschaltung 404 und den einzelnen Submodulen ungefähr gleich groß sind, dann können die Lichtwellenleiter der optischen Submodul-Kommunikationsverbindungen eine identische Länge aufweisen und identisch konfektioniert werden. Dies ermöglicht eine besonders preisgünstige Lösung.

Es wurden ein Umrichter und ein Verfahren beschrieben, mit denen die Nachrichtenübertragung zwischen einer Steuereinrichtung und Submodulen eines Multilevelumrichters kostengünstig durchgeführt werden kann.

## Patentansprüche

1. Modularer Multilevelumrichter (1) mit einer elektronischen Schnittstellenschaltung(404)und Submodulen (1_1 bis 6_n), welche jeweils mindestens ein erstes elektronisches Schaltelement (202), ein zweites elektronisches Schaltelement (206), einen elektrischen Energiespeicher (210), einen ersten galvanischen Stromanschluss (212), einen zweiten galvanischen Stromanschluss (215) und einen optischen Kommunikationsanschluss (230) aufweisen, und mit einer Steuereinrichtung (35) für die Submodule, wobei
- die Steuereinrichtung (35) mittels einer ersten Kommunikationsverbindung (402) mit der elektronischen Schnittstellenschaltung (404) verbunden ist,
- die Schnittstellenschaltung (404) eine Vielzahl von Submodul-Schnittstellen (450, 452) aufweist,
- die Submodul-Schnittstellen (450, 452) jeweils mittels einer optischen Submodul-Kommunikationsverbindung (456, 461) mit dem Kommunikationsanschluss (230) eines der Submodule (1_1, 2_1) optisch verbunden sind,
- die Schnittstellenschaltung (404) eine Verteilerschaltung (430) aufweist, welche dazu eingerichtet ist, eine von der Steuereinrichtung (35) stammende Nachricht (520), die für eines der Submodule (1_1) bestimmt ist, zu derjenigen Submodul-Schnittstelle (450) zu verteilen, die mit dem einen Submodul (1_1) verbunden ist, und
- die erste Kommunikationsverbindung (402) eine erste optische Kommunikationsverbindung (402) ist,
**dadurch gekennzeichnet, dass**
- mindestens eines der Submodule ein Halbbrückenmodul (201) ist, bei dem das erste elektronische Schaltelement (202) elektrisch in Reihe geschaltet ist mit dem zweiten elektronischen Schaltelement (206), an dem Verbindungspunkt zwischen den beiden Schaltelementen (202, 206) der erste galvanische Stromanschluss (212) angeordnet ist, an dem Anschluss des zweiten Schaltelements (206), welcher dem Verbindungspunkt gegenüberliegt, der zweite galvanische Stromanschluss (215) angeordnet ist, der zweite Stromanschluss (215) mit einem ersten Anschluss des Energiespeichers (210) verbunden ist, und ein zweiter Anschluss des Energiespeichers (210) elektrisch verbunden ist mit dem Anschluss des ersten Schaltelements (202), der dem Verbindungspunkt gegenüberliegt, und
- die Schnittstellenschaltung (404) eine Sammelschaltung (438) aufweist, welche dazu eingerichtet ist, von mehreren der Submodule (1_1, 2_1) stammende Nachrichten (530, 532), die jeweils für die Steuereinrichtung (35) bestimmt sind, gesammelt (536) als eine Sammelnachricht (536) über die erste optische Kommunikationsverbindung (402) zu der Steuereinrichtung (35) weiterzuleiten, wobei die Nachrichten (530, 532) seriell in der Sammelnachricht (536) angeordnet sind.

2. Multilevelumrichter nach Anspruch 1,
**dadurch gekennzeichnet, dass**
- die optischen Submodul-Kommunikationsverbindungen (456, 461) bidirektionale optische Submodul-Kommunikationsverbindungen (456, 461) sind.

3. Multilevelumrichter nach Anspruch 1 oder 2,
**dadurch gekennzeichnet, dass**
- die optischen Submodul-Kommunikationsverbindungen (456) jeweils mindestens einen Lichtwellenleiter (458, 460) aufweisen, der die Schnittstellenschaltung (404) mit einem der Submodule (1_1) verbindet.

4. Multilevelumrichter nach einem der vorhergehenden Ansprüche,
**dadurch gekennzeichnet, dass**
- die optischen Submodul-Kommunikationsverbindungen (456) jeweils einen Hin-Lichtwellenleiter (458) zur Nachrichtenübertragung von der Schnittstellenschaltung (404) zu dem jeweiligen Submodul (1_1) und einen Rück-Lichtwellenleiter (460) zur Nachrichtenübertragung von dem jeweiligen Submodul (1_1) zu der Schnittstellenschaltung (404) aufweisen.

5. Multilevelumrichter nach einem der vorhergehenden Ansprüche,
**dadurch gekennzeichnet, dass**
- die optischen Submodul-Kommunikationsverbindungen (463) jeweils einen weiteren Hin-Lichtwellenleiter (464) zur Nachrichtenübertragung von der Schnittstellenschaltung (404) zu dem jeweiligen Submodul (1_3) und einen weiteren Rück-Lichtwellenleiter (468) zur Nachrichtenübertragung von dem jeweiligen Submodul (1_3) zu der Schnittstellenschaltung (404) aufweisen, wobei der weitere Hin-Lichtwellenleiter (464) und der weitere Rück-Lichtwellenleiter (468) redundant sind.

6. Multilevelumrichter nach einem der vorhergehenden Ansprüche,
**dadurch gekennzeichnet, dass**
- die erste optische Kommunikationsverbindung (402) eine erste bidirektionale optische Kommunikationsverbindung (402) ist.

7. Multilevelumrichter nach einem der vorhergehenden Ansprüche,
**dadurch gekennzeichnet, dass**
- die erste optische Kommunikationsverbindung (402) mindestens einen Lichtwellenleiter (408, 414) aufweist, der die Steuereinrichtung (35) mit der Schnittstellenschaltung (404) verbindet.

8. Multilevelumrichter nach einem der vorhergehenden Ansprüche,
**dadurch gekennzeichnet, dass**
- die erste optische Kommunikationsverbindung (402) einen Hin-Lichtwellenleiter (408) zur Nachrichtenübertragung von der Steuereinrichtung (35) zu der Schnittstellenschaltung (404) und einen Rück-Lichtwellenleiter (414) zur Nachrichtenübertragung von der Schnittstellenschaltung (404) zu der Steuereinrichtung (35) aufweist.

9. Multilevelumrichter nach einem der vorhergehenden Ansprüche,
**dadurch gekennzeichnet, dass**
- die erste optische Kommunikationsverbindung (402) einen weiteren Hin-Lichtwellenleiter (420) zur Nachrichtenübertragung von der Steuereinrichtung (35) zu der Schnittstellenschaltung (404) und einen weiteren Rück-Lichtwellenleiter (426) zur Nachrichtenübertragung von der Schnittstellenschaltung (404) zu der Steuereinrichtung (35) aufweist, wobei der weitere Hin-Lichtwellenleiter (420) und der weitere Rück-Lichtwellenleiter (426) redundant sind.

10. Multilevelumrichter nach einem der vorhergehenden Ansprüche,
**dadurch gekennzeichnet, dass**
- die Sammelschaltung (438) der Schnittstellenschaltung (404) dazu eingerichtet ist, eine von einem der Submodule (1_1) stammende Nachricht (530), die für die Steuereinrichtung (35) bestimmt ist, über die erste optische Kommunikationsverbindung (402) zu der Steuereinrichtung (35) weiterzuleiten.

11. Multilevelumrichter nach einem der vorhergehenden Ansprüche,
**dadurch gekennzeichnet, dass**
- die Abstände zwischen der Schnittstellenschaltung (404) und den Submodulen (1_1 bis 6_n) jeweils kleiner sind als der Abstand zwischen der Schnittstellenschaltung (404) und der Steuereinrichtung (35).

12. Multilevelumrichter nach einem der vorhergehenden Ansprüche,
**dadurch gekennzeichnet, dass**
- die Lichtwellenleiter (458, 460) der optischen Submodul-Kommunikationsverbindungen (456) jeweils kürzer sind als der mindestens eine Lichtwellenleiter (408, 414) der ersten optischen Kommunikationsverbindung (402).

13. Verfahren zum Übertragen einer Nachricht zwischen einer Steuereinrichtung (35) und Submodulen (1_1 bis 6_n) eines modularen Multilevelumrichters (1), wobei die Submodule (1_1 bis 6_n) jeweils mindestens ein erstes elektronisches Schaltelement (202), ein zweites elektronisches Schaltelement (206), einen elektrischen Energiespeicher (210), einen ersten galvanischen Stromanschluss (212), einen zweiten galvanischen Stromanschluss (215) und einen optischen Kommunikationsanschluss (230) aufweisen, und wobei die Steuereinrichtung (35) mittels einer ersten optischen Kommunikationsverbindung (402) mit einer elektronischen Schnittstellenschaltung (404) verbunden ist, die Schnittstellenschaltung (404) eine Vielzahl von Submodul-Schnittstellen (450, 452) aufweist, und die Submodul-Schnittstellen (450, 452) jeweils mittels einer optischen Submodul-Kommunikationsverbindung (456, 461) mit einem der Submodule (1_1, 2_1) optisch verbunden sind, wobei bei dem Verfahren
- eine für eines der Submodule (1_1) bestimmte Nachricht (520) von der Steuereinrichtung (35) über die erste optische Kommunikationsverbindung (402) zu der elektronischen Schnittstellenschaltung (404) übertragen wird,
- die Nachricht (520) zu derjenigen Submodul-Schnittstelle (450) weitergeleitet wird, die mit dem einen Submodul (1_1) verbunden ist, und
- daraufhin die Nachricht (520) zu dem einen Submodul (1_1) übertragen wird,
**dadurch gekennzeichnet, dass**
- mindestens eines der Submodule ein Halbbrückenmodul (201) ist, bei dem das erste elektronische Schaltelement (202) elektrisch mit dem zweiten elektronischen Schaltelement (206)in Reihe geschaltet ist, an dem Verbindungspunkt zwischen den beiden Schaltelementen (202, 206) der erste galvanische Stromanschluss (212) angeordnet ist, an dem Anschluss des zweiten Schaltelements (206), welcher dem Verbindungspunkt gegenüberliegt, der zweite galvanische Stromanschluss (215) angeordnet ist, der zweite Stromanschluss (215) mit einem ersten Anschluss des Energiespeichers (210) verbunden ist, und ein zweiter Anschluss des Energiespeichers (210) elektrisch verbunden ist mit dem Anschluss des ersten Schaltelements (202), der dem Verbindungspunkt gegenüberliegt,
- eine für die Steuereinrichtung (35) bestimmte Nachricht (530) von dem einen Submodul (1_1) über die mit dem einen Submodul (1_1) verbundene Submodul-Kommunikationsverbindung (456) zu der Schnittstellenschaltung (404) übertragen wird, und
- daraufhin die für die Steuereinrichtung (35) bestimmte Nachricht (530) gemeinsam mit einer von einem anderen Submodul (2_1) stammenden, für die Steuereinrichtung (35) bestimmten Nachricht (532) als eine Sammelnachricht (536) über die erste optische Kommunikationsverbindung (402) zu der Steuereinrichtung (35) übertragen wird, wobei die Nachrichten (530, 532) seriell in der Sammelnachricht (536) angeordnet sind.

14. Verfahren nach Anspruch 13,
**dadurch gekennzeichnet, dass**
- eine für die Steuereinrichtung (35) bestimmte Nachricht (530) von dem einen Submodul (1_1) über die mit dem einen Submodul (1_1) verbundene Submodul-Kommunikationsverbindung (456) zu der Schnittstellenschaltung (404) übertragen wird, und
- daraufhin die für die Steuereinrichtung (35) bestimmte Nachricht (530) über die erste optische Kommunikationsverbindung (402) zu der Steuereinrichtung (35) übertragen wird.

15. Verfahren nach Anspruch 13 oder 14,
**dadurch gekennzeichnet, dass**
- die für die Steuereinrichtung (35) bestimmte Nachricht (530) von dem einen Submodul (1_1) über einen Rück-Lichtwellenleiter (460) der Submodul-Kommunikationsverbindung (456) zu der Schnittstellenschaltung (404) übertragen wird.

16. Verfahren nach einem der Ansprüche 13 bis 15,
**dadurch gekennzeichnet, dass**
- die für die Steuereinrichtung (35) bestimmte Nachricht von dem einen Submodul (1_3) über einen Rück-Lichtwellenleiter (466) und über einen weiteren redundanten Rück-Lichtwellenleiter (468) der Submodul-Kommunikationsverbindung (463) zu der Schnittstellenschaltung (404) übertragen wird.

17. Verfahren nach einem der Ansprüche 13 bis 16,
**dadurch gekennzeichnet, dass**
- die für die Steuereinrichtung (35) bestimmte Nachricht (530) von der Schnittstellenschaltung (404) über einen Rück-Lichtwellenleiter (414) der ersten optischen Kommunikationsverbindung (402) zu der Steuereinrichtung (35) übertragen wird.

18. Verfahren nach einem der Ansprüche 13 bis 17,
**dadurch gekennzeichnet, dass**
- die für die Steuereinrichtung (35) bestimmte Nachricht (530) von der Schnittstellenschaltung (404) über einen Rück-Lichtwellenleiter (414) der ersten optischen Kommunikationsverbindung (402) und über einen weiteren redundanten Rück-Lichtwellenleiter (426) der ersten optischen Kommunikationsverbindung (402) zu der Steuereinrichtung (35) übertragen wird.

## Claims

1. Modular multilevel converter (1) having an electronic interface circuit (404) and submodules (1_1 to 6_n), which submodules each have at least a first electronic switching element (202), a second electronic switching element (206), an electrical energy store (210), a first galvanic power terminal (212), a second galvanic power terminal (215) and an optical communication terminal (230), and having a control device (35) for the submodules, wherein
- the control device (35) is connected to the electronic interface circuit (404) by means of a first communication connection (402),
- the interface circuit (404) has a multiplicity of submodule interfaces (450, 452),
- the submodule interfaces (450, 452) are each optically connected to the communication terminal (230) of one of the submodules (1_1, 2_1) by means of an optical submodule communication connection (456, 461),
- the interface circuit (404) has a distribution circuit (430) which is configured to distribute a message (520), which originates from the control device (35) and is intended for one of the submodules (1_1), to that submodule interface (450) which is connected to the one submodule (1_1), and
- the first communication connection (402) is a first optical communication connection (402),
**characterized in that**
- at least one of the submodules is a half-bridge module (201) in which the first electronic switching element (202) is electrically connected in series with the second electronic switching element (206), the first galvanic power terminal (212) is arranged at the connection point between the two switching elements (202, 206), the second galvanic power terminal (215) is arranged at that terminal of the second switching element (206) which is opposite the connection point, the second power terminal (215) is connected to a first terminal of the energy store (210), and a second terminal of the energy store (210) is electrically connected to that terminal of the first switching element (202) which is opposite the connection point, and
- the interface circuit (404) has a collector circuit (438) which is configured to forward messages (530, 532), which originate from a plurality of the submodules (1_1, 2_1) and are each intended for the control device (35), together (536) as a collective message (536) to the control device (35) via the first optical communication connection (402), wherein the messages (530, 532) are arranged serially in the collective message (536).

2. Multilevel converter according to Claim 1,
**characterized in that**
- the optical submodule communication connections (456, 461) are bidirectional optical submodule communication connections (456, 461).

3. Multilevel converter according to Claim 1 or 2,
**characterized in that**
- the optical submodule communication connections (456) each have at least one optical waveguide (458, 460) which connects the interface circuit (404) to one of the submodules (1_1).

4. Multilevel converter according to one of the preceding claims,
**characterized in that**
- the optical submodule communication connections (456) each have a forward optical waveguide (458) for transmitting messages from the interface circuit (404) to the respective submodule (1_1) and a return optical waveguide (460) for transmitting messages from the respective submodule (1_1) to the interface circuit (404).

5. Multilevel converter according to one of the preceding claims,
**characterized in that**
- the optical submodule communication connections (463) each have a further forward optical waveguide (464) for transmitting messages from the interface circuit (404) to the respective submodule (1_3) and a further return optical waveguide (468) for transmitting messages from the respective submodule (1_3) to the interface circuit (404), wherein the further forward optical waveguide (464) and the further return optical waveguide (468) are redundant.

6. Multilevel converter according to one of the preceding claims,
**characterized in that**
- the first optical communication connection (402) is a first bidirectional optical communication connection (402).

7. Multilevel converter according to one of the preceding claims,
**characterized in that**
- the first optical communication connection (402) has at least one optical waveguide (408, 414) which connects the control device (35) to the interface circuit (404).

8. Multilevel converter according to one of the preceding claims,
**characterized in that**
- the first optical communication connection (402) has a forward optical waveguide (408) for transmitting messages from the control device (35) to the interface circuit (404) and a return optical waveguide (414) for transmitting messages from the interface circuit (404) to the control device (35).

9. Multilevel converter according to one of the preceding claims,
**characterized in that**
- the first optical communication connection (402) has a further forward optical waveguide (420) for transmitting messages from the control device (35) to the interface circuit (404) and a further return optical waveguide (426) for transmitting messages from the interface circuit (404) to the control device (35), wherein the further forward optical waveguide (420) and the further return optical waveguide (426) are redundant.

10. Multilevel converter according to one of the preceding claims,
**characterized in that**
- the collector circuit (438) of the interface circuit (404) is configured to forward a message (530), which originates from one of the submodules (1_1) and is intended for the control device (35), to the control device (35) via the first optical communication connection (402).

11. Multilevel converter according to one of the preceding claims,
**characterized in that**
- the distances between the interface circuit (404) and the submodules (1_1 to 6_n) are each less than the distance between the interface circuit (404) and the control device (35).

12. Multilevel converter according to one of the preceding claims,
**characterized in that**
- the optical waveguides (458, 460) of the optical submodule communication connections (456) are each shorter than the at least one optical waveguide (408, 414) of the first optical communication connection (402).

13. Method for transmitting a message between a control device (35) and submodules (1_1 to 6_n) of a modular multilevel converter (1), wherein the submodules (1_1 to 6_n) each have at least a first electronic switching element (202), a second electronic switching element (206), an electrical energy store (210), a first galvanic power terminal (212), a second galvanic power terminal (215) and an optical communication terminal (230), and wherein the control device (35) is connected to an electronic interface circuit (404) by means of a first optical communication connection (402), the interface circuit (404) has a multiplicity of submodule interfaces (450, 452), and the submodule interfaces (450, 452) are each optically connected to one of the submodules (1_1, 2_1) by means of an optical submodule communication connection (456, 461), wherein in the method
- a message (520) intended for one of the submodules (1_1) is transmitted from the control device (35) to the electronic interface circuit (404) via the first optical communication connection (402),
- the message (520) is forwarded to that submodule interface (450) which is connected to the one submodule (1_1), and
- the message (520) is subsequently transmitted to the one submodule (1_1),
**characterized in that**
- at least one of the submodules is a half-bridge module (201) in which the first electronic switching element (202) is electrically connected in series with the second electronic switching element (206), the first galvanic power terminal (212) is arranged at the connection point between the two switching elements (202, 206), the second galvanic power terminal (215) is arranged at that terminal of the second switching element (206) which is opposite the connection point, the second power terminal (215) is connected to a first terminal of the energy store (210), and a second terminal of the energy store (210) is electrically connected to that terminal of the first switching element (202) which is opposite the connection point,
- a message (530) intended for the control device (35) is transmitted from the one submodule (1_1) to the interface circuit (404) via the submodule communication connection (456) connected to the one submodule (1_1), and
- the message (530) intended for the control device (35) is subsequently transmitted together with a message (532), originating from another submodule (2_1) and intended for the control device (35), as a collective message (536) to the control device (35) via the first optical communication connection (402), wherein the messages (530, 532) are arranged serially in the collective message (536).

14. Method according to Claim 13,
**characterized in that**
- a message (530) intended for the control device (35) is transmitted from the one submodule (1_1) to the interface circuit (404) via the submodule communication connection (456) connected to the one submodule (1_1), and
- the message (530) intended for the control device (35) is subsequently transmitted to the control device (35) via the first optical communication connection (402).

15. Method according to Claim 13 or 14,
**characterized in that**
- the message (530) intended for the control device (35) is transmitted from the one submodule (1_1) to the interface circuit (404) via a return optical waveguide (460) of the submodule communication connection (456).

16. Method according to one of Claims 13 to 15,
**characterized in that**
- the message intended for the control device (35) is transmitted from the one submodule (1_3) to the interface circuit (404) via a return optical waveguide (466) and via a further redundant return optical waveguide (468) of the submodule communication connection (463).

17. Method according to one of Claims 13 to 16,
**characterized in that**
- the message (530) intended for the control device (35) is transmitted from the interface circuit (404) to the control device (35) via a return optical waveguide (414) of the first optical communication connection (402).

18. Method according to one of Claims 13 to 17,
**characterized in that**
- the message (530) intended for the control device (35) is transmitted from the interface circuit (404) to the control device (35) via a return optical waveguide (414) of the first optical communication connection (402) and via a further redundant return optical waveguide (426) of the first optical communication connection (402).

## Revendications

1. Onduleur (1) modulaire à plusieurs niveaux comprenant un circuit (404) électronique d'interface et des sous-modules (1_1 à 6_n), qui ont chacun au moins un premier élément (202) électronique de coupure, un deuxième élément (206) électronique de coupure, un accumulateur (210) d'énergie électrique, une première borne (212) galvanique de courant, une deuxième borne (215) galvanique de courant et une borne (230) optique de communication, et comprenant un dispositif (35) de commande des sous-modules, dans lequel
- le dispositif (35) de commande communique avec le circuit (404) électronique d'interface au moyen d'une première liaison (402) de communication,
- le circuit (404) d'interface a une pluralité d'interfaces (450, 452) de sous-modules,
- les interfaces (450, 452) de sous-module sont reliées optiquement chacune à la borne (230) de communication de l'un des sous-modules (1_1, 2_1) au moyen d'une liaison (456, 461) optique de communication de sous-module,
- le circuit (404) d'interface a un circuit (430) distributeur, qui est conçu pour distribuer un message (520), issu du dispositif (35) de commande et destiné à l'un des sous-modules (1_1), à l'interface (450) de sous-module, qui est reliée au un sous-module (1_1), et
- la première liaison (402) de communication est une première liaison (402) optique de communication,
**caractérisé en ce que**
- au moins l'un des sous-modules est un module (201) à demi-pont, dans lequel le premier élément (202) électronique de coupure est monté est série électriquement avec le deuxième élément (206) électronique de coupure, la première borne (212) galvanique de courant est montée au point de liaison, entre les deux éléments (202, 206) de coupure, la deuxième borne (215) galvanique de courant est montée à la borne du deuxième élément (206) de coupure, qui est opposée au point de liaison, la deuxième borne (215) de courant est reliée à une première borne de l'accumulateur (210) d'énergie et une deuxième borne de l'accumulateur (210) d'énergie est reliée électriquement à la borne du premier élément (202) de coupure, qui est opposée au point de liaison, et
- le circuit (404) d'interface a un circuit (438) collecteur, qui est conçu pour acheminer au dispositif (35) de commande, par l'intermédiaire de la première liaison (402) optique de communication, rassemblés en un message (536) rassemblé, des messages (530, 532), qui proviennent de plusieurs des sous-modules (1_1, 2_1) et qui sont destinés respectivement au dispositif (35) de commande, les messages (530, 532) étant disposés en série dans le message (536) rassemblé.

2. Onduleur à plusieurs niveaux suivant la revendication 1,
**caractérisé en ce que**
- les liaisons (456, 461) optiques de communication de sous-modules sont des liaisons (456, 461) optiques bidirectionnelles de communication de sous-module.

3. Onduleur à plusieurs niveaux suivant la revendication 1 ou 2,
**caractérisé en ce que**
- les liaisons (456) optiques de communication de sous-module ont chacune un guide (458, 460) d'ondes lumineuses, qui relie le circuit (404) d'interface à l'un des sous-module (1_1).

4. Onduleur à plusieurs niveaux suivant l'une des revendications précédentes,
**caractérisé en ce que**
- les liaisons (456) optiques de communication de sous-module ont chacune un guide (458) d'ondes lumineuses aller de transmission de messages du circuit (404) d'interface au sous-module (1_1) respectif et un guide (460) d'ondes lumineuses retour de transmission de messages du sous-module (1_1) respectif au circuit (404) d'interface.

5. Onduleur à plusieurs niveaux suivant l'une des revendications précédentes,
**caractérisé en ce que**
- les liaisons (463) optiques de communication de sous-modules ont chacune un autre guide (464) d'ondes lumineuses aller de transmission de message du circuit (404) d'interface au sous-module (1_3) respectif et un autre guide (468) d'ondes lumineuses retour de transmission de message du sous-module (1_3) respectif au circuit (404) d'interface, le guide (464) d'ondes lumineuses aller et l'autre guide (468) d'ondes lumineuses retour étant redondants.

6. Onduleur à plusieurs niveaux suivant l'une des revendications précédentes,
**caractérisé en ce que**
- la première liaison (402) optique de communication est une première liaison (402) optique bidirectionnelle de communication.

7. Onduleur à plusieurs niveaux suivant l'une des revendications précédentes,
**caractérisé en ce que**
- la première liaison (402) optique de communication a au moins un guide (408, 414) d'ondes lumineuses, qui relie le dispositif (35) de commande au circuit (404) d'interface.

8. Onduleur à plusieurs niveaux suivant l'une des revendications précédentes,
**caractérisé en ce que**
- la première liaison (402) optique de communication a un guide (408) d'ondes lumineuses aller pour la transmission de messages du dispositif (35) de commande au circuit (404) d'interface et un guide (414) d'ondes lumineuses retour pour la transmission de messages du circuit (404) d'interface au dispositif (35) de commande.

9. Onduleur à plusieurs niveaux suivant l'une des revendications précédentes,
**caractérisé en ce que**
- la première liaison (402) optique de communication a un autre guide (420) d'ondes lumineuses aller pour la transmission de messages du dispositif (35) de commande au circuit (404) d'interface et un autre guide (426) d'ondes lumineuses retour pour la transmission de messages du circuit (404) d'interface au dispositif (35) de commande, l'autre guide (420) d'ondes lumineuses aller et l'autre guide (426) d'ondes lumineuses retour étant redondants.

10. Onduleur à plusieurs niveaux suivant l'une des revendications précédentes,
**caractérisé en ce que**
- le circuit (438) collecteur du circuit (404) d'interface est conçu pour acheminer au dispositif (35) de commande, par l'intermédiaire de la première liaison (402) optique de communication, un message (530), qui provient d'un sous-module (1_1) et qui est destiné au dispositif (35) de commande.

11. Onduleur à plusieurs niveaux suivant l'une des revendications précédentes,
**caractérisé en ce que**
- les distances entre le circuit (404) d'interface et les sous-modules (1_1 à 6_n) sont chacune plus petite que la distance entre le circuit (404) d'interface et le dispositif (35) de commande.

12. Onduleur à plusieurs niveaux suivant l'une des revendications précédentes,
**caractérisé en ce que**
- les guides (458, 460) d'ondes lumineuses des liaisons (456) optiques de communication de sous-module sont chacun plus courts que le au moins un guide (408, 414) d'ondes lumineuses de la première liaison (402) optique de communication.

13. Procédé de transmission d'un message entre un dispositif (35) de commande et des sous-modules (1_1 à 6_n) d'un onduleur (1) modulaire à plusieurs niveaux, dans lequel les sous-modules (1_1 à 6_n) ont chacun au moins un premier élément (202) électronique de coupure, un deuxième élément (206) électronique de coupure, un accumulateur (210) d'énergie électrique, une première borne (212) galvanique de courant, une deuxième borne (215) galvanique de courant et une borne (230) optique de communication,
et dans lequel le dispositif (35) de commande est relié à un circuit (404) électronique d'interface au moyen d'une première liaison (402) optique de communication, le circuit (404) d'interface a une pluralité d'interfaces (450, 452) de sous-module et les interfaces (450, 452) de sous-module sont reliées optiquement chacune à l'un des sous-modules (1_1, 2_1) au moyen d'une liaison (456, 461) optique de communication de sous-module, dans lequel dans le procédé
- on transmet un message (520) destiné à l'un des sous-modules (1_1) du dispositif (35) de commande au circuit (404) électronique d'interface par la première liaison (402) optique de communication,
- on achemine le message (520) à l'interface (450) de sous-modules, qui est reliée au un sous-module (1_1), et
- on transmet ensuite le message (520) au un sous-module (1_1), **caractérisé en ce qu'**
- au moins l'un des sous-modules est un module (201) à demi-pont, dans lequel le premier élément (202) électronique de coupure est monté est série électriquement avec le deuxième élément (206) électronique de coupure, la première borne (212) galvanique de courant est montée au point de liaison entre les deux éléments (202, 206) de coupure, la deuxième borne (215) galvanique de courant est montée à la borne du deuxième élément (206) de coupure, qui est opposée au point de liaison, la deuxième borne (215) de courant est reliée à une première borne de l'accumulateur (210) d'énergie et une deuxième borne de l'accumulateur (210) d'énergie est reliée électriquement à la borne du premier élément (202) de coupure, qui est opposée au point de liaison,
- on transmet un message (530) destiné au dispositif (35) de commande d'un sous-module (1_1) au circuit (404) d'interface, par l'intermédiaire de la liaison (456) de communication de sous-modules reliée au un sous-module (1_1), et
- on transmet ensuite au dispositif (35) de commande, par l'intermédiaire de la première liaison (402) optique de communication, sous la forme d'un message (536) rassemblé, le message (530) destiné au dispositif (35) de communication conjointement un message (532) provenant d'un autre sous-module (2_1) et destiné au dispositif (35) de commande, les messages (530, 532) étant disposés en série dans le message (536) rassemblé.

14. Procédé suivant la revendication 13,
**caractérisé en ce qu'**
- on transmet un message (530) destiné au dispositif (35) de communication du un sous-module (1_1) au circuit (404) d'interface, par l'intermédiaire de la liaison (456) de communication de sous-modules reliée au un sous-module (1_1), et
- on transmet ensuite le message (530) destiné au dispositif (35) de commande au dispositif (35) de commande, par la première liaison (402) optique de communication.

15. Procédé suivant la revendication 13 ou 14,
**caractérisé en ce qu'**
- on transmet le message (530) destiné au dispositif (35) de commande du un sous-module (1_1) au circuit (404) d'interface par un guide (460) d'ondes lumineuses retour de la liaison (456) de communication de sous-module.

16. Procédé suivant l'une de revendications 13 à 15,
**caractérisé en ce qu'**
- on transmet le message destiné au dispositif (35) de commande du un sous-modules (1_3) au circuit (404) d'interface par un guide (466) d'ondes lumineuses retour et par un autre guide (468) d'ondes lumineuses retour redondant de la liaison (463) de communication de sous-module.

17. Procédé suivant l'une de revendications 13 à 16,
**caractérisé en ce qu'**
- on transmet le message (530) destiné au dispositif (35) de commande du circuit (404) d'interface au dispositif (35) de commande par un guide (414) d'ondes lumineuses retour de la première liaison (402) optique de communication.

18. Procédé suivant l'une de revendications 13 à 17,
**caractérisé en ce qu'**
- on transmet le message (530) destiné au dispositif (35) de commande du circuit (404) d'interface au dispositif (35) de commande par un guide (414) d'ondes lumineuses retour de la première liaison (402) optique de communication et par un autre guide (426) d'ondes lumineuses retour redondant de la première liaison (402) optique de communication.
